# EUROPEAN PATENT APPLICATION

(11) **EP 2 112 474 A1**
(43) Date of publication of application: **28.10.2009**
(21) Application number: 08007910.6
(22) Date of filing: 24.04.2008
(51) Int. Cl.: G01D 5/12, A23G 1/20, A23G 1/22, A23G 1/26, A23G 3/20, A23G 7/00

(54) **Chocolate moulding line**

(71) Applicant: AASTED-MIKROVERK APS, 3520 Farum (DK)
(72) Inventor: Refer, Jacob Christian, 3100 Hornbaek (DK)

(57) **Abstract**

Chocolate moulding production line with an endless conveyor (2) for the transportation of mould plates (3) sliding in a guide (4). A moulding station (7) with at least one separate plunger plate (8; 9) carrying a plurality of plungers (10; 11). Lifting means (12) is arranged in the moulding station (7) under the mould plates (3) and being adapted to lift up the mould plates (3) into engagement with the plunger plates (8; 9) during moulding of the chocolate articles. The mould plates (3) comprise mould plates with at least two different configurations (A, B). The configurations corresponds with the configuration of plungers on the plunger plates (8,9). Detecting means (14) is arranged for detecting the configurations (A, B) of the particular mould plates (3) before entering the moulding station (7).

## Description

The present invention concerns the technical field of chocolate moulding production lines with an endless conveyor for the transportation of mould plates sliding in a guide. The moulding lines comprise at least one moulding station with at least one separate plunger plate carrying a plurality of plungers and being permanently fixed horizontally, as well as at least one depositor in relation to the moulding station.

The mentioned moulding stations operate according to the so-called cold-pressing principle at which the plungers are immersed into chocolate already deposited into cavities in the particular mould plate. During immersion the plungers press up the liquid or flow able and deformable chocolate in the cavity to an article such as a shell with a predetermined shape. The plungers are cooled to a predetermined temperature such as typically between - 1°C and -25°C.

Lifting means is also arranged in the moulding station under the moulds and being adapted to lift up the moulds into engagement with the plunger plates during moulding of the chocolate articles.

Generally, the chocolate mass handled by the chocolate moulding production lines encompasses all types of suspensions of non-fat particles such as sugar, milk powders and cocoa solids mixed up with a liquid fat constituent which are capable of crystallizing. When it comes to pure chocolate mass, the fat phase comprises genuine cocoa butter of until around 30%, but may comprise substitutes as well. Such substitutes can be in the form of other types of fat-containing oils. Chocolate types where the cocoa butter has been replaced wholly or partly by other fats are often named commercially as compound chocolate, in which the cocoa butter has been replaced by palm-kernel oil. Mass made of 100% fat in the form of cocoa butter or the like as compound is also possible.

The chocolate mass delivered to the line is typically tempered, meaning that whether the fat phase constitutes of genuine cocoa butter or substitutes therefore, the fat phase must be capable of crystallizing into stable crystal types, such as the β-crystals developing in genuine cocoa butter when the mass solidifies. Decisive for obtaining an even quality of the chocolate articles in relation to taste and appearance are dominantly the content and type of crystals in the mass solidified. Optimal is when the type of crystals are stable BetaV crystals only and that the content thereof in the ready tempered chocolate mass is at the desired preset content between 0.1 and 1.0% - however being constant - for example of 0.35% for a specific production. Only then the manufacturer can rely on that the quality of his chocolate products are always the same and only then eatable chocolate articles with god taste and shiny appearance are created.

After having passed through the tempering apparatus the chocolate mass is typically deposited into moulds or deposited on top of pre-made articles in the moulding station. By the industrial scale continuous process performed by the chocolate moulding lines typically between 1000 and 100.000 articles are moulded per hour. This corresponds roughly to a capacity of moulding articles in between 1 and 40 mould plates per minute in the chocolate production line.

The demands put forward by today's manufacturers of chocolate articles are increasing. On the one hand a high capacity such as the possibility of running between 5 and 40 mould plates through the moulding station per minute is desirable, and at the same time a greater flexibility of producing different articles in the same line without changes is desired as well. This means that the same production line must be able to produce more different articles without the necessity of performing time consuming change of plunger plates and or of mould plates in the line. With today's high-performance chocolate moulding lines having endless conveyors this is not possible. Instead a new different set of plunger plates must be arranged in the moulding station and all the previous mould plates must be taken out and replaced with different ones before the new articles can be produced.
This is a highly cumbersome and time-consuming operation for the crew to perform as chocolate moulding lines with endless conveyors and a capacity typically between 5 and 40 mould plates per minute comprise between 800 and 1000 mould plates in total in the production line. One can easily imagine the job to be done. Typically it takes two persons a whole week to have the job done and adjust the new plunger plates, mould plates and the line for the production of the new articles to run smoothly.

DE 10 2005 018 417 A1 discloses a cold-pressing moulding station for a chocolate production line. The moulding station has three permanently arranged plunger plates, which are fixed in the same horizontal plane to a carrier supported in a frame resting on the floor. In the frame is also supported three lifting means arranged under each of the plunger plates. The moulding station has its own short conveyor for the moulds, so that the moulding station easily can be taken in and out of a production line when required. Such a system runs typically with lower capacities such as below 5 moulds per minute due to the delicate transfer of mould plates from the separate conveyor in the moulding station and to the conveyors in the rest of the production line. It is however suggested, that a loose mould system could be used with the particular moulding station so that the particular mould plate in the station is lifted up and free from the halted conveyor chain during pressing of the articles.
The disclosure shows the same configuration of the plungers on the three plunger plates and only one corresponding configuration of cavities in the mould plates. The disclosure is silent about the problematic of changing the production to another article or to make different articles in the same production.

A first problem to solve is to provide a chocolate production moulding line for high volume production and by which shifting and replacement of mould plates can be avoided when different articles is to be produced.

A second problem to solve is to provide a chocolate production moulding line of the introductory art, which in the same production run can produce at least two different configurations of articles in a high volume production.

A further problem to be solved is to avoid crash of the moulding line for cold-pressing when it comprises mould plates with different configurations.

The solution of the present invention is **characterised in, that** the mould plates comprise mould plates with at least two different configurations and that one of the configurations corresponds with the configuration of plungers on the plunger plate, and that detecting means is arranged for detecting the configurations of the particular mould plates before entering the moulding station. Thereby it can be decided if a plunger plate with a corresponding configuration is available in the moulding station or not. It is then possible to provide a chocolate moulding line with mould plates having different configurations so that its not necessary to change and replace mould plate between each new production run.

When at least two plunger plates are arranged having different configurations of plungers its possible to choose between production of chocolate articles in mould plates with two different configurations of articles without the need of replacing mould plates and plunger plates.

When the second of the two different configurations of mould plates corresponds with the configuration of plungers on the second plunger plate its possible to produce two differently configured articles in the same production run.
This is especially advantageous and time saving as a complete production of different articles can be at least cut down to the half time.

The detecting means is advantageously adapted to provide a particular signal corresponding to the detected configuration of the particular mould. During production of chocolate articles the detecting means will detect each mould plate and create a signal corresponding to the particular configuration of cavities in that mould plate.

When a control unit is a arranged for receiving the particular signal from the detecting means, the signal can be send on to the depositor and to the moulding station. The depositor and the moulding station then achieves knowledge of that a mould plate with a particular configuration is approaching. The depositor then has then appropriate data of which chocolate type and in which amounts it shall be deposited into that particular mould plate when it arrives under the depositor. Then moulding station is also already feed with data of the particular mould plate configuration and decides under which plunger plate the particular mould plate then shall stop and be lifted up and pressed when it arrives in the moulding station.

The invention is further described by referral to the drawing, in which
figure 1 schematically discloses a first embodiment of the chocolate moulding production line according to the invention,
figure 2 one of the plunger plates and the underlying mould plate of the chocolate moulding production line of figure 1, seen in vertical section,
figure 3 the chocolate moulding production line of figure 1 in which a mould plate is lifted up into engagement with a plunger plate so that chocolate articles are being moulded,
figure 4 schematically a part of another embodiment of the chocolate moulding production line according to the invention where the moulding station has a row of six plunger plates,
figure 5 the part of the chocolate moulding production line of figure 4 with all the underlying mould plates disclosed in an up-lifted moulding position,
figure 6 the embodiment of figure 4 where now only four mould plates are lifted up into the pressing and moulding position, and
figure 7 schematically from above the tracks of the conveyors that transports the articles further on to the related packaging stations for the particular articles moulded by the chocolate moulding production line according to the invention.

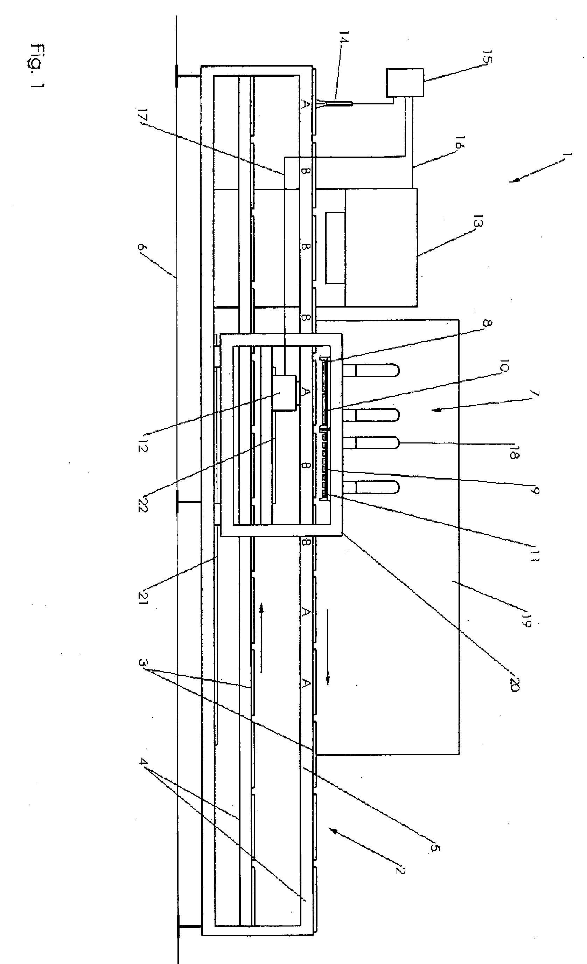

The chocolate moulding production line 1 in figure 1 is disclosed schematically in its simplest version. With this is meant that all the gear and equipment normally encompassed by moulding lines and which are not necessary to disclose for understanding the invention, is left out from the drawing. Such gear and equipment could be the driving rolls and gear motors for providing the conveyor motion and speed and which are normally arranged at each end of the line. It could also be cooling equipment for the cooled plungers in the plunger plates, it could be details of the hoisting and lowering equipment for the mould plates or it could be details of the depositor.
The chocolate moulding production line of figure 1 is also disclosed with only one depositor. Typically two or more depositors are arranged at a moulding line for achieving more than one chocolate type in the moulded part of the articles or to provide the moulded articles with a centre filling of for example nougat or cream mass.

The chocolate moulding production line according to the invention disclosed in figure 1 comprises an endless conveyor 2 for the transportation of mould plates 3 sliding in a guide 4. The endless conveyor comprises a support 5 standing on the floor 6. The support 5 carries the endless conveyor 2, all the mould plates 3 as well as the guides in which the mould plates 3 slides.

The moulding line 1 also comprises at least one moulding station 7 with two plunger plates 8 and 9 each carrying a particular set of plungers 10 and 11, each with their own configuration, respectively.

Lifting means 12 is arranged in the moulding station 7 under the moulds 3 and being adapted to lift up the moulds 3 into engagement with the plunger plates 8 or 9 during moulding of the chocolate articles.

The moulding line 1 further comprises a depositor 13 arranged for depositing chocolate mass into the cavities of the particular mould plates 3 during their passage through the depositor.

The mould plates 3 comprise mould plates with at least two different configurations A, B respectively. The mould plates 3 with the configuration A corresponds with the plunger plates 8 and the configuration of the plungers 10 and the mould plates 3 with the configuration B of the cavities corresponds with configuration of the plungers 11 at the plunger plate 9.

Further is detecting means 14 arranged for detecting the particular configuration of the mould in question on its way to entering the moulding station 13. The detecting means 14 is connected with a computing device 15, which is further connected with the depositor 13 and the lifting means 12 of the moulding station 7 by means of wires 16, 17 respectively.

In the moulding station 7 the plunger plates 8, 9 are typically feed with some kind of cooling liquid circulating in the hoses 18. As the temperature of the plungers 10, 11 are typically kept very cold such as between -5°C and - 25°C it is necessary to dehumidify the atmosphere around the plungers intensively in an encapsulated environment in a housing 19 for the plungers to be free from frost and ice build-up.

The plunger plates 8, 9 are permanently fixed to a support frame 20, which is arranged so that it can slide forth and back on rails 21 arranged on the moulding line frame or support 5. The lifting means 12 itself is arranged on rails 22 arranged on the support frame 20, so that the lifting means 12 itself can slide forth and back in relation to the support frame 20 irrespective of what position the support frame is in.

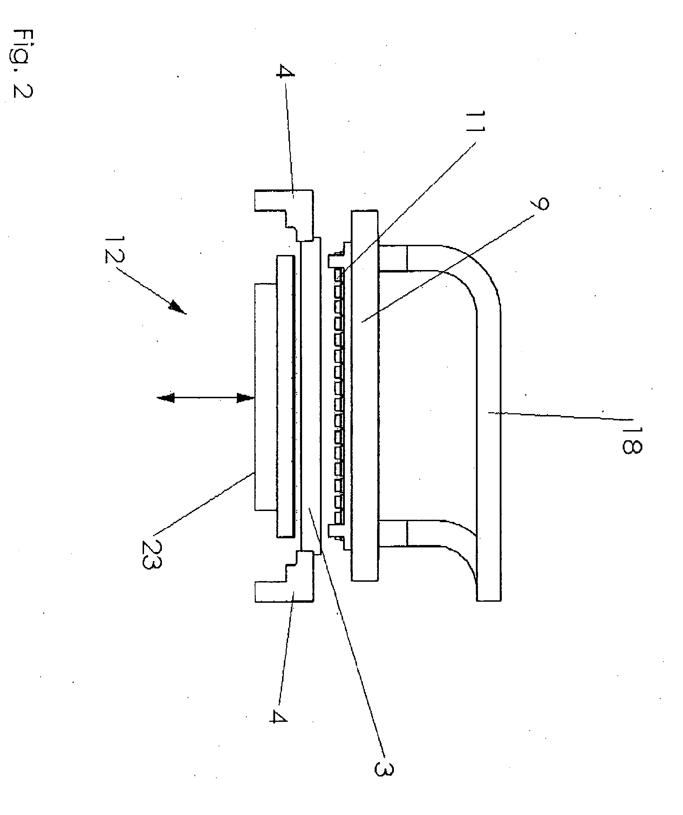

In figure 2 is schematically disclosed in vertical section the plunger plate 9 with the plungers 11 and the underlying mould plate 3 resting in the upwardly open slides 4 of the conveyor frame 2. Under the mould plate 3 is disclosed an upper part of the lifting means 12 disclosed as a planar support 23 adapted to pres and support the particular mould plate 3 from below when it is to be lifted up and into engagement with the plunger plate during pressing and moulding of the articles.

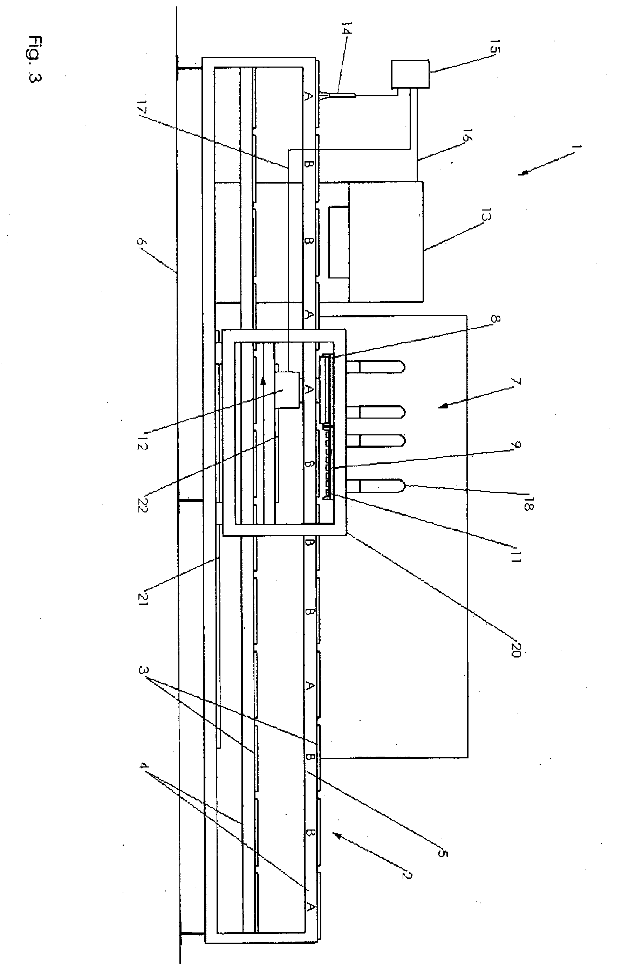

In the position of the conveyor 2 disclosed in figure 1 the particular mould plate 3 with the configuration A is detected by the detecting means 14. The detecting means 14 could be a camera or a magnetic sensor or in fact any type of sensor as long as the sensor transmits different signals for the different configurations of mould plates 3, A, B respectively. The signal is received by the calculating device 15, which computes and transmits different signals to the depositor and to the cold-pressing station, respectively of when the particular mould 3 with configuration A is to be received. Typically, the depositor receives or calculates itself appropriate chocolate type and configuration to be deposited into the mould plate 3 A. When the particular mould plate 3 with the configuration A, now filled with chocolate in its cavities, has reached the moulding station 7 and the position disclosed in figure 3 under the appropriate plunger plate 8 with the appropriate plungers 10 to be immersed, the moulding process itself can take place in that mould plate. The lifting means 12 lifts up the planar support 23 and the particular mould plate 3 until it is fully in engagement with the plunger plate 9 and the plungers 11 has shaped the liquid chocolate into complete shape of the desired articles of the configuration A. After a predetermined time the lifting means 12 lowers the planar support 23 again and the next moulding sequence can take place.

During each moulding process the conveyor 2 can be stopped. However, when highest possible production rates is desired, it is surely advantageous when the conveyor simply keeps its speed and the support frame 20 travels in an intermittent movement forth and back on the rails 21, so that the moulding operation is performed during continuous travel of the support frame 20 with the conveyor and the moulds 3 through the moulding station.

Irrespective of the order of the particular mould plates 3 with the configurations A or B in the conveyor the detecting means detects the particular configuration A or B or what ever it may be to enter the moulding station. Then mould plates with different configurations can permanently stay in the moulding line so that shift of mould plates is avoided. Also the mould plates with different configurations A or B can be arranged in the conveyor in a random manner. Permanently, the detecting means simply detects the configuration of the next mould plate in the row to enter the moulding station so the computing means can decide if and when its appropriate to proceed with a moulding procedure in the particular mould plate.

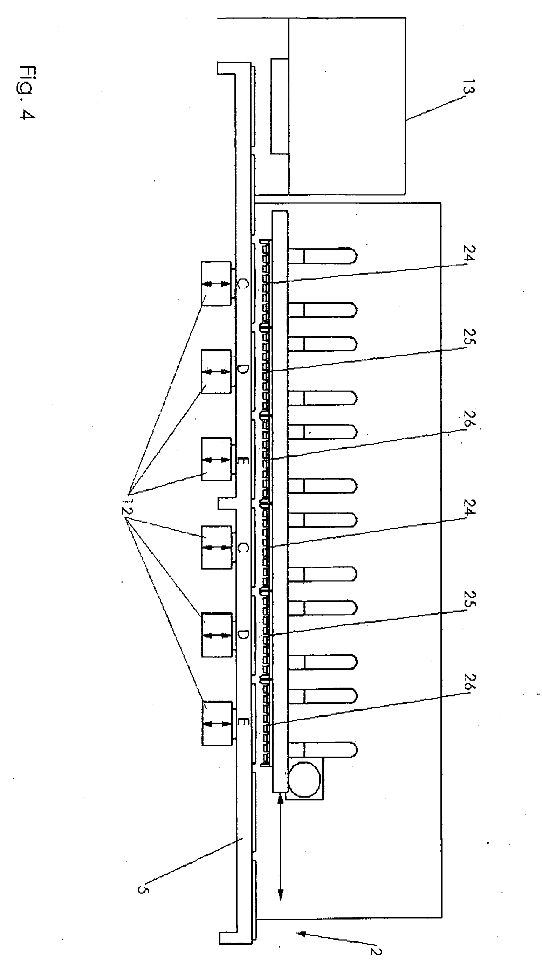

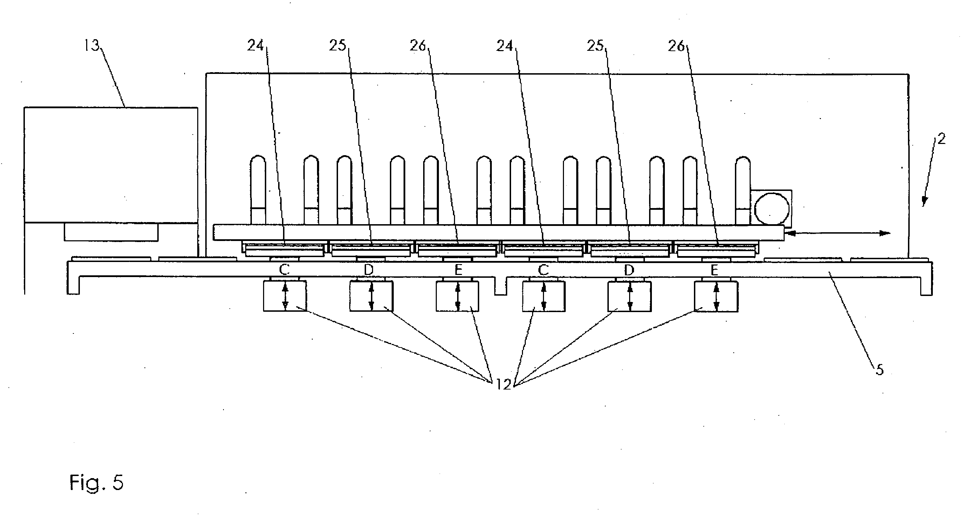

In figure 4 is disclosed an embodiment with six plunger plates arranged as two identical pairs 24, 25, 26 each having different plungers. Schematically is disclosed a position where mould plates 3 with configurations C, D and E is to be pressed at a time by the six plunger plates. In figure 5 is disclosed the actual moulding and pressing operation performed. Under each of the plunger plates 24, 25 and 26 is arranged a lifting means 12. With so many plunger plates and lifting means its possible to achieve a very high production capacity and at the same time operate with a chocolate moulding line having three or more different configurations of mould plates in it, such as C, D and E.

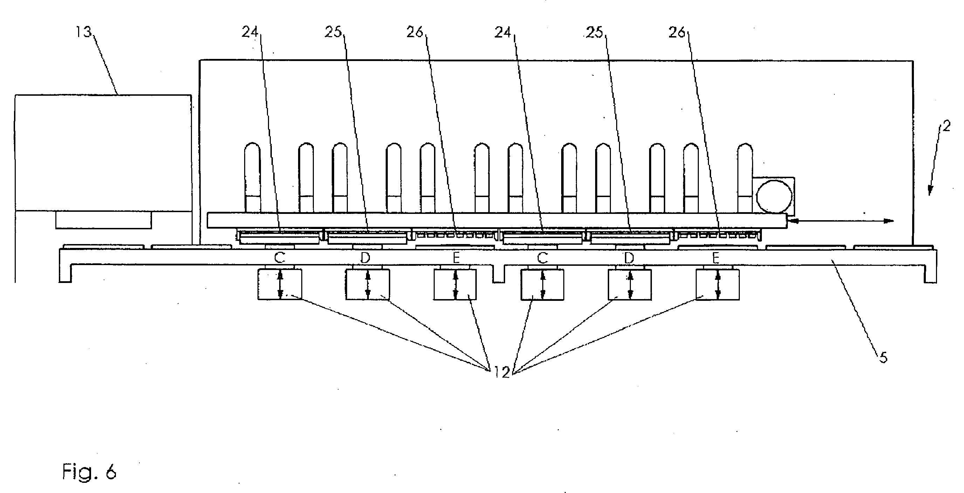

In figure 6 is disclosed a situation where the detecting means has detected that mould plates with configurations A and F is present. These could not be pressed in the positions of the plunger plates 26, as the plungers of these plunger plates 26 does not correspond with the configurations A and F.

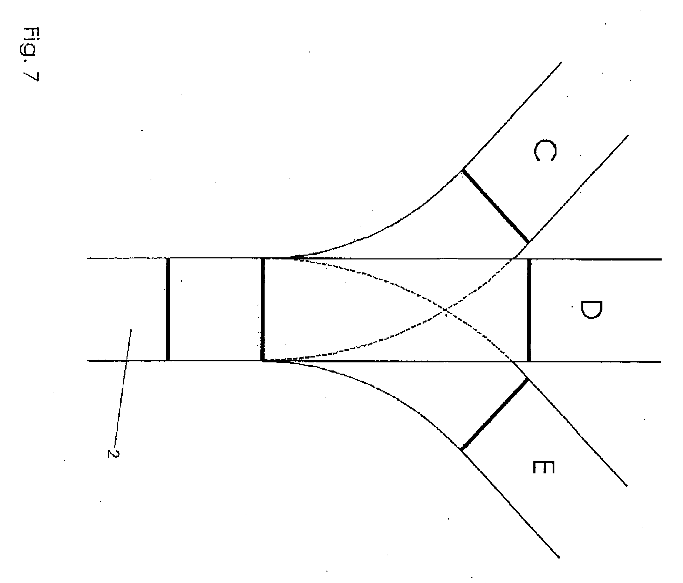

In figure 7 is disclosed schematically how the articles could leave the conveyor 2 so that the articles from mould plates with configuration C leaves to the left, the articles from mould plates with configuration D leaves straight forward and the articles from mould plates with configuration E leaves to the right for further packaging and handling.

## Claims

1. Chocolate moulding production line with an endless conveyor (2) for the transportation of mould plates (3) sliding in a guide (4), further comprising
a moulding station (7) with at least one separate plunger plate (8; 9) carrying a plurality of plungers (10; 11) and being permanently fixed horizontally, as well as a depositor (13),
that lifting means (12) is arranged in the moulding station (7) under the mould plates (3) and being adapted to lift up the mould plates (3) into engagement with the plunger plates (8; 9) during moulding of the chocolate articles,
**characterised in,**
**that** the mould plates (3) comprise mould plates with at least two different configurations (A, B) and that one of the configurations corresponds with the configuration of plungers on the plunger plate, and
**that** detecting means (14) is arranged for detecting the configurations (A, B, C, D, E, F) of the particular mould plates (3) before entering the moulding station (7).

2. Chocolate moulding line according to claim 1, **characterised in, that** at least two plunger plates (8, 9) is arranged having different configurations of plungers (10, 11).

3. Chocolate moulding line according to claim 1 and 2, **characterised in, that** the second of the two different configurations (A or B) of mould plates corresponds with the configuration of plungers on the second plunger plate (8 or 9).

4. Chocolate moulding line according to claim 1, **characterised in, that** the detecting means (14) is adapted to provide a particular signal corresponding to the detected configuration of the particular mould.

5. Chocolate moulding line according to claim 1, **characterised in, that** a control unit (15) is arranged for receiving the particular signal from the detecting means (14) and further to send it on to the depositor (13).

6. Chocolate moulding line according to claim 1, **characterised in, that** the control
unit (15) is adapted to send the signal on to the moulding station (7).

7. Chocolate moulding line according to claim 1, **characterised in, that** the mould
plates comprise at least two different configurations (A, B, C, D, E) that corresponds
with each of the at least two different configurations of the plungers on the plunger plates (8, 9, 24, 25, 26).

8. Chocolate moulding line according to claim 1, **characterised in, that** at least two plunger plates have the same configuration of plungers.

9. Chocolate moulding line according to claim 1, **characterised in, that** the chocolate moulding line is a so-called loose mould line comprising an upwardly open guide (4) for the mould plates (3).
